# EUROPEAN PATENT SPECIFICATION

(11) **EP 3 696 403 B1**
(45) Date of publication and mention of the grant of the patent: **26.03.2025**
(21) Application number: 20155885.5
(22) Date of filing: 06.02.2020
(51) Int. Cl.: F03D 7/02

(54) **SYSTEM AND METHOD FOR PROTECTING WIND TURBINES FROM FLUTTER DURING HIGH WIND SPEEDS**
SYSTEM UND VERFAHREN ZUM SCHUTZ VON WINDTURBINEN GEGEN FLATTERN BEI HOHEN WINDGESCHWINDIGKEITEN
SYSTÈME ET PROCÉDÉ POUR PROTÉGER LES ÉOLIENNES CONTRE LE BATTEMENT PENDANT LES VITESSES DE VENT ÉLEVÉES

(30) Priority: 14.02.2019 US 201916275685
(43) Date of publication of application: 19.08.2020
(73) Proprietor: General Electric Renovables España, S.L., 08005 Barcelona (ES)
(72) Inventor: Dharmadhikari, Parag Rameshchandra, 85748 Garching b. München (DE); Stettner, Martin, 85748 Garching b. München (DE)
(74) Representative: Zimmermann & Partner Patentanwälte mbB

(56) References cited:
- EP-A2- 2 003 335
- EP-A2- 2 738 382
- US-A1- 2009 047 129
- US-A1- 2011 211 961
- US-A1- 2013 129 508

## Description

### FIELD

The present disclosure relates in general to wind turbine, and more particularly to systems and methods for protecting wind turbines from flutter during high wind speeds.

### BACKGROUND

Wind power is considered one of the cleanest, most environmentally friendly energy sources presently available, and wind turbines have gained increased attention in this regard. A modem wind turbine typically includes a nacelle fixed atop a tower, a generator and a gearbox housed with the nacelle, and a rotor configured with the nacelle having a rotatable hub with one or more rotor blades. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

The rotor blades generally include a suction side shell and a pressure side shell secured together at bond lines along the leading and trailing edges of the blade. Further, the pressure and suction shells are relatively lightweight and have structural properties (e.g., stiffness, buckling resistance and strength) which are not configured to withstand the bending moments and other loads exerted on the rotor blade during operation. Thus, to increase the stiffness, buckling resistance, and strength of the rotor blade, the body shell is typically reinforced using one or more structural components (e.g. opposing spar caps with a shear web configured therebetween) that engage the inner pressure and suction side surfaces of the shell halves. The spar caps and/or shear web may be constructed of various materials, including but not limited to glass fiber laminate composites and/or carbon fiber laminate composites. EP 2 003 335 A2 relates to a horizontal axis wind turbine, wherein when a wind speed is above a predetermined value, a yaw angle of the nacelle is fixed, a pitch angle of the blade is controlled in accordance with a yaw angle of the wind direction relative to the nacelle. US 2013/0129508 A1 relates to a wind turbine.

In recent years, wind turbines for wind power generation have increased in size to achieve improvement in power generation efficiency and to increase the amount of power generation. Along with the increase in size of wind turbines for wind power generation, wind turbine rotor blades have also increased in size. With this increased size, the wind turbine structure as well as the rotor blades can also experience increased loading.

For example, high wind speed zones (e.g. hurricanes, typhoons, etc.) create challenges for large wind turbines, where the risk to the structure becomes very high, particularly when the wind turbine does not have any structural reinforcement. One such risk is flutter phenomenon, which generally refers to the dynamic instability of an elastic structure in a fluid flow, caused by positive feedback between the body's deflection and the force exerted by the fluid flow.

Thus, to minimize the negative effects mentioned herein, it would be advantageous for the wind turbine to include a control logic that protects wind turbines from flutter during high wind speeds. Accordingly, the present disclosure is directed to improved systems and methods that reduce or eliminate flutter by modifying blade pitch angle of the wind turbine.

### BRIEF DESCRIPTION

Aspects and advantages of the invention will be set forth in part in the following description, or may be obvious from the description, or may be learned through practice of the invention

In one aspect, the present disclosure is directed to a method for protecting an idling wind turbine power system from damage during loss of grid power according to independent claim 1. A wind turbine power system has a plurality of rotor blades. A method includes monitoring an incoming wind direction at the wind turbine power system. When the incoming wind direction is changing at a predetermined attack angle, the method also includes rotating at least one of the rotor blades of the wind turbine power system to a pitch angle that is offset from a feather position by a predetermined number of degrees to reduce and/or eliminate flutter phenomenon from occurring.

In one embodiment, the method may also include determining at least one of a rotor position or a rotor orientation of the wind turbine power system and rotating at least one of the rotor blades of the wind turbine power system to the pitch angle that is offset from the feather position by the predetermined number of degrees when the rotor position and/or the rotor orientation are indicative of the flutter phenomenon occurring.

The method further includes yawing the nacelle of the wind turbine approximately 180 degrees away from the incoming wind direction when the incoming wind direction is changing at the predetermined attack angle. The predetermined number of degrees includes less than about 10 degrees.

In additional embodiments, rotating at least one of the rotor blades to the pitch angle that is offset from a feather position by the predetermined number of degrees may include rotating each of the plurality of rotor blades by the same number of degrees. In alternative embodiments, rotating at least one of the rotor blades to the pitch angle that is offset from a feather position by the predetermined number of degrees may include rotating each of the plurality of rotor blades by a different number of degrees.

In particular embodiments, the feather position may include a position in which a chord of the rotor blade is approximately inline with the incoming wind direction at stand still or minimal rotation.

The method includes utilizing backup energy stored in the wind turbine power system for powering one or more wind turbine components during the loss of grid power, the one or more wind turbine components comprising one or more yaw drive mechanisms. The wind turbine power system includes at least one energy storage device for storing the backup energy. In addition, the wind turbine component(s) may include one or more pitch drive mechanisms, a brake, a main controller, and/or one or more electrical components of the wind turbine power system.

In further embodiments, if the main controller of the wind turbine power system is offline due to the loss of grid power, the energy storage device is configured to power operation of the wind turbine power system without interruption.

In another aspect, the present disclosure is directed to a backup control system for protecting an idling wind turbine power system from damage during loss of grid power according to the independent system claim. A backup control system includes a pitch control system having an auxiliary power supply and a plurality of pitch drive mechanisms communicatively coupled to the auxiliary power supply via a communication link. As such, during the loss of grid power, the auxiliary power supply powers the pitch control system to implement a control scheme for the wind turbine power system. The control scheme includes monitoring an incoming wind direction at the wind turbine power system. When the incoming wind direction is changing at a predetermined attack angle, the control scheme includes rotating at least one of the plurality of rotor blades of the wind turbine power system to a pitch angle that is offset from a feather position by a predetermined number of degrees to reduce and/or eliminate flutter phenomenon from occurring. It should be understood that the method may also include any of the steps and/or features as described herein.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a wind turbine according to the present disclosure;
FIG. 2 illustrates a simplified, internal view of one embodiment of a nacelle according to the present disclosure;
FIG. 3 illustrates a block diagram of one embodiment of a controller according to the present disclosure;
FIG. 4 illustrates a schematic diagram of one embodiment a control system of a wind turbine according to the present disclosure; and
FIG. 5 illustrates a flow diagram of one embodiment of a method for protecting a wind turbine power system from damage during loss of grid power according to the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

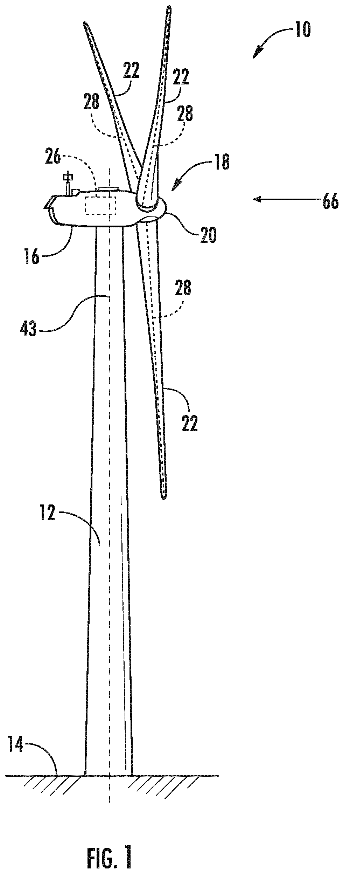

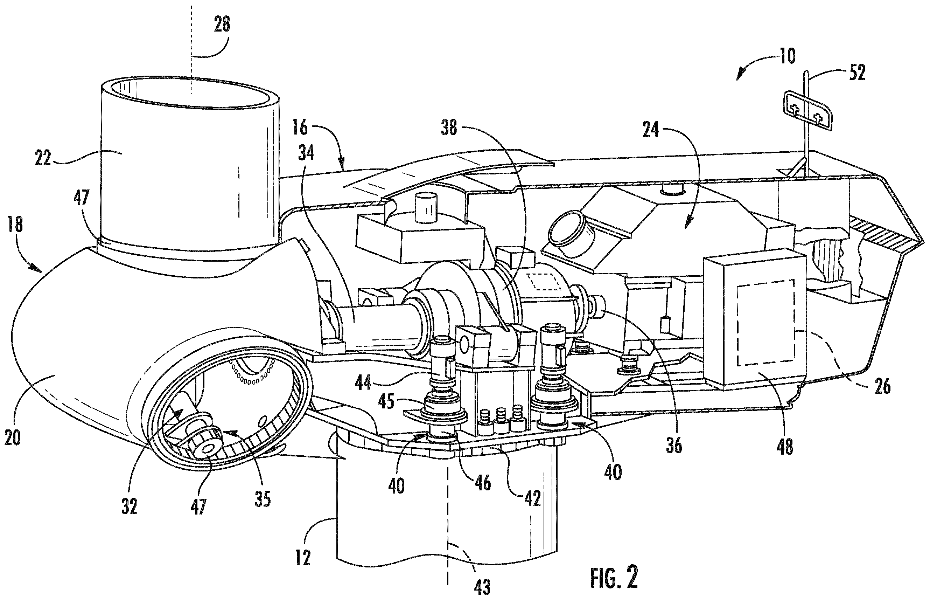

Referring now to the drawings, FIG. 1 illustrates a perspective view of one embodiment of a wind turbine 10 according to the present disclosure. As shown, the wind turbine 10 generally includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator 24 (FIG. 2) positioned within the nacelle 16 to permit electrical energy to be produced.

The wind turbine 10 may also include a wind turbine controller 26 centralized within the nacelle 16. For example, as shown, the turbine controller 26 is located in the top box cabinet 48 (FIG 2). However, in other embodiments, the controller 26 may be located within any other component of the wind turbine 10 or at a location outside the wind turbine 10. Further, the controller 26 may be communicatively coupled to any number of the components of the wind turbine 10 in order to control the operation of such components and/or implement a correction action. As such, the controller 26 may include a computer or other suitable processing unit. Thus, in several embodiments, the controller 26 may include suitable computer-readable instructions that, when implemented, configure the controller 26 to perform various different functions, such as receiving, transmitting and/or executing wind turbine control signals. Accordingly, the controller 26 may generally be configured to control the various operating modes (e.g., start-up or shut-down sequences), de-rating or up-rating the wind turbine, and/or individual components of the wind turbine 10.

Referring now to FIG. 2, a simplified, internal view of one embodiment of the nacelle 16 of the wind turbine 10 shown in FIG. 1 is illustrated. As shown, a generator 24 may be disposed within the nacelle 16. In general, the generator 24 may be coupled to the rotor 18 for producing electrical power from the rotational energy generated by the rotor 18. For example, as shown in the illustrated embodiment, the rotor 18 may include a rotor shaft 34 coupled to the hub 20 for rotation therewith. The rotor shaft 34 may, in turn, be rotatably coupled to a generator shaft 36 of the generator 24 through a gearbox 38. As is generally understood, the rotor shaft 34 may provide a low speed, high torque input to the gearbox 38 in response to rotation of the rotor blades 22 and the hub 20. The gearbox 38 may then be configured to convert the low speed, high torque input to a high speed, low torque output to drive the generator shaft 36 and, thus, the generator 24.

The wind turbine 10 may also a yaw drive mechanism 40 configured to change the angle of the nacelle 16 relative to the wind (e.g., by engaging a yaw bearing 42 of the wind turbine 10 that is arranged between the nacelle 16 and the tower 12 of the wind turbine 10). Further, each yaw drive mechanism 40 may include a yaw drive motor 44 (e.g., any suitable electric motor), a yaw drive gearbox 45, and a yaw drive pinion 46. In such embodiments, the yaw drive motor 44 may be coupled to the yaw drive gearbox 45 so that the yaw drive motor 44 imparts mechanical force to the yaw drive gearbox 45. Similarly, the yaw drive gearbox 45 may be coupled to the yaw drive pinion 46 for rotation therewith. The yaw drive pinion 46 may, in turn, be in rotational engagement with the yaw bearing 42 coupled between the tower 12 and the nacelle 16 such that rotation of the yaw drive pinion 46 causes rotation of the yaw bearing 42. Thus, in such embodiments, rotation of the yaw drive motor 44 drives the yaw drive gearbox 45 and the yaw drive pinion 46, thereby rotating the yaw bearing 42 and the nacelle 16 about the yaw axis 43. Similarly, the wind turbine 10 may include pitch control system 35 having one or more pitch adjustment mechanisms 32 communicatively coupled to the wind turbine controller 26, with each pitch adjustment mechanism(s) 32 being configured to rotate the pitch bearing 47 and thus the individual rotor blade(s) 22 about the pitch axis 28.

In addition, the wind turbine 10 may also include one or more sensors 52 for monitoring various wind conditions of the wind turbine 10. For example, the incoming wind direction 66, wind speed, or any other suitable wind condition near of the wind turbine 10 may be measured, such as through use of a suitable weather sensor 52. Suitable weather sensors 52 include, for example, Light Detection and Ranging ("LIDAR") devices, Sonic Detection and Ranging ("SODAR") devices, anemometers, wind vanes, barometers, radar devices (such as Doppler radar devices) or any other sensing device which can provide wind directional information now known or later developed in the art.

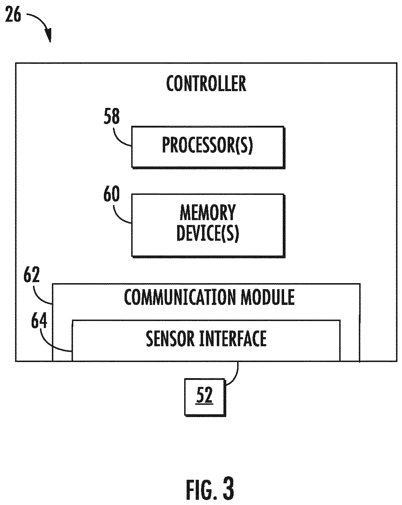

Referring now to FIG. 3, a block diagram of one embodiment of the controller 26 according to the present disclosure is illustrated. As shown, the controller 26 may include a computer or other suitable processing unit that may include suitable computer-readable instructions that, when implemented, configure the controller 26 to perform various different functions, such as receiving, transmitting and/or executing wind turbine control signals. More specifically, as shown, there is illustrated a block diagram of one embodiment of suitable components that may be included within the controller 26 in accordance with example aspects of the present disclosure. As shown, the controller 26 may include one or more processor(s) 58 and associated memory device(s) 60 configured to perform a variety of computer-implemented functions (e.g., performing the methods, steps, calculations and the like disclosed herein).

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 60 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements.

Such memory device(s) 60 may generally be configured to store suitable computer-readable instructions that, when implemented by the processor(s) 58, configure the controller 26 to perform various functions as described herein. Additionally, the controller 26 may also include a communications interface 62 to facilitate communications between the controller 26 and the various components of the wind turbine 10. An interface can include one or more circuits, terminals, pins, contacts, conductors, or other components for sending and receiving control signals. Moreover, the controller 26 may include a sensor interface 64 (e.g., one or more analog-to-digital converters) to permit signals transmitted from the sensors to be converted into signals that can be understood and processed by the processors 58.

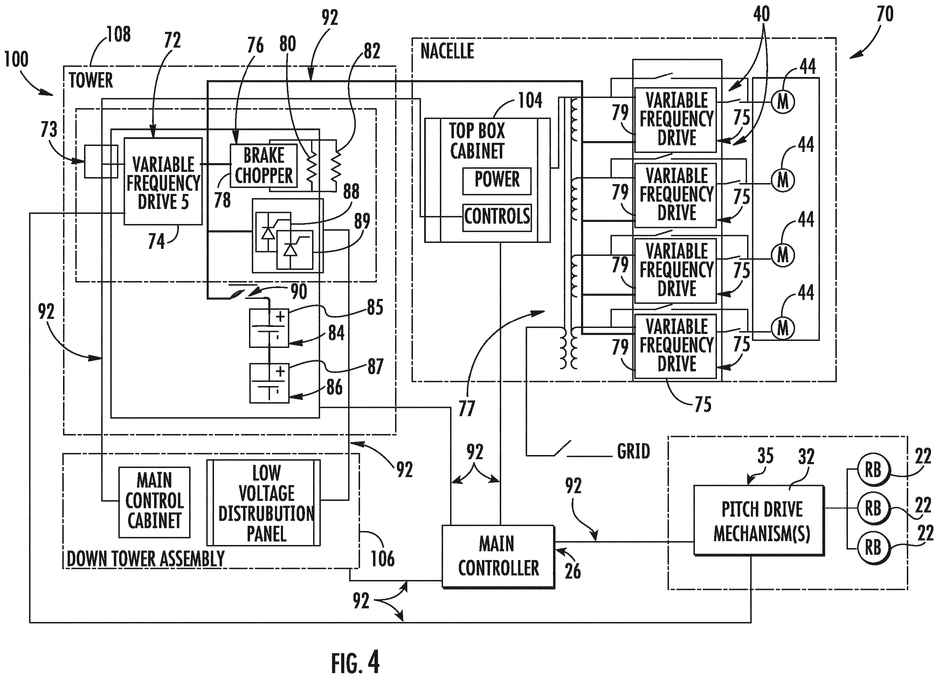

Referring now to FIG. 4, a distributed control system 100 for a wind turbine, such as wind turbine 10 of FIG. 1, according to one embodiment of the disclosure is illustrated. As shown, the control system 100 may include the main wind turbine controller 26 and a plurality of distributed input and output (I/O) modules 104, 106, 108 for individual control of one or more wind turbine components. Thus, as will be described herein, the distributed control system 100 has backup capabilities for protecting the system 100 from damage during loss of grid power.

More specifically, as shown in the illustrated embodiment, the control system 100 includes a top box distributed I/O module 104, a downtower distributed I/O module 106, and a tower distributed I/O module 108. Further, as shown, each of the distributed I/O modules 104, 106, 108 are connected to the main turbine controller 26 via a plurality of communication link 92 for command and monitoring. It should be understood that the communications links 92 as described herein may include any suitable communication medium for transmitting the signals. For instance, the communications links 92 may include any number of wired or wireless links, including communication via one or more Ethernet connections, fiber optic connections, network buses, power lines, conductors, or circuits for transmitting information wirelessly. Further, signals may be communicated over the communications links 92 using any suitable communication protocol, such as a serial communication protocol, broadband over power line protocol, wireless communication protocol, or other suitable protocol.

Thus, during normal operation, the turbine controller 26 is configured to receive information from the input modules and send information to output modules. The inputs and outputs can be either analog signals which are continuously changing or discrete signals. More specifically, in certain embodiments, the top box distributed I/O module 104 is configured to provide I/O to the turbine controller 26 so as to control uptower components of the wind turbine 10, e.g. the yaw drive mechanisms 40 and/or the pitch drive mechanisms 32. Similarly, the downtower distributed I/O module 106 is configured to provide I/O to the turbine controller 26 so as to control the downtower electrical assembly, e.g. transformers, etc. The tower distributed I/O module 108 is configured to provide I/O to the tower components as described herein. In addition, the control system 100 may include more or less distributed I/O modules than those depicted in FIG. 4 depending on the specific components of the wind turbine 10.

Referring still to FIG. 4, the control system 100 of the present disclosure includes a yaw system 70 having a plurality of yaw system components configured to change an angle of the nacelle 16 of the wind turbine 10 relative to the incoming wind direction 66 that can operate through various failures of the overall system 100. In addition, as shown, the control system 100 may include an auxiliary power supply 72 having a hydraulic brake power control device (e.g. a variable frequency drive 74). As such, the auxiliary power supply 72 is configured to power all programmable logic controllers (PLC) of the control system 100, as well as providing the communication and controls of the control system 100. In addition, the control system 100 may include a filter unit 73 that is connected to the output of the auxiliary power supply 72. For example, in one embodiment, the auxiliary power supply 72 may correspond to a fixed frequency inverter (i.e. running at desired frequency that is equal to the prevailing grid frequency) that provides a PWM output. In such an embodiment, the filter unit 73 may include a sinusoidal filter to eliminate the harmonics of the output.

The control system 100 may further include a braking unit 76 coupled to the variable frequency drive 74. More specifically, as shown in the illustrated embodiment, the braking unit 76 may include a brake chopper 78 coupled to the variable frequency drive 74 and at least two dynamic brake resistors 80, 82 coupled to the brake chopper 78. As such, the multiple dynamic brake resistors 80, 82 provide redundancy to the braking unit 76 in the event of a resistor failure.

Further, as shown, the control system 100 includes at least two energy storage devices 84, 86 coupled to the braking unit 76. More specifically, as shown, each of the energy storage device(s) 84, 86 may include at least two battery units 85, 87 coupled to at least two battery chargers 88, 89 via a fuse 90. In other words, the battery units 85, 87 and/or battery chargers 88, 89 are designed to operate in a load-sharing configuration, with each of the battery units 85, 87 and/or battery chargers 88, 89 capable of taking the complete load. Further, the fuse 90 described herein provides DC fuse protection at the output of battery unit(s) 85, 87, particularly for overload and arc flash protection against short circuits.

As mentioned, the control system 100 also includes the yaw drive mechanisms 40 (including, at least, the yaw drive motor 44 and the yaw bearing 42) and the pitch drive mechanisms 32 described herein that are communicatively coupled to the auxiliary power supply 72 and the main controller 26 via one or more communication links 92. More specifically, as shown, each of the yaw drive mechanisms 40 includes a yaw power control device (e.g. yaw variable frequency drive 75). For example, in certain embodiments, the yaw variable frequency drives 75 may correspond to four-quad front end converters that provide back-to-back AC DC bridges to enable energy flow in both the directions with a common DC bus. In addition, as shown, the control system 100 may include a multiple-winding transformer 77 to facilitate the bidirectional energy transfer, thereby enabling the exchange of energy between all system components.

Referring still to FIG. 4, the yaw system 70 may also include one or more controllers 79 configured to control the variable frequency drives 75. For example, in one embodiment, the yaw variable frequency drives 75 may correspond to intelligent converters each having a separate controller 79 configured to evaluate the forces locally and compare with one or more driving command(s), which eliminates the dependency on the turbine controller 26. In addition, as shown, the pitch control system 35 may also be connected to the auxiliary power supply 72 via a communication link 92. In addition, as mentioned, the pitch control system 35 may include the pitch drive mechanisms 32 (i.e. one for each rotor blade 22). Thus, during the loss of grid power, the auxiliary power supply 72 powers the pitch control system 35 to implement a control scheme for the wind turbine power system 100.

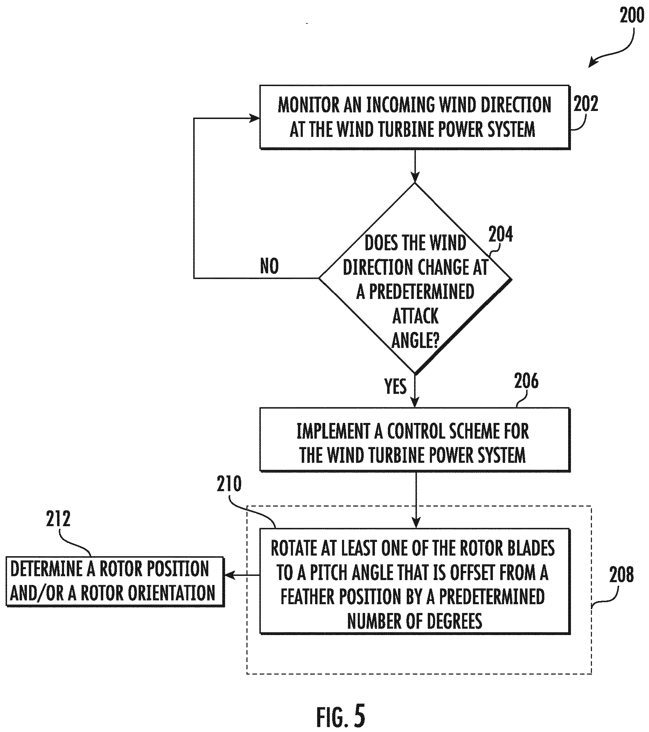

Referring now to FIG. 5, a flow chart 200 of a method for protecting a wind turbine power system from damage during loss of grid power according to the present disclosure is illustrated. In general, the method 200 will be described herein with reference to the wind turbine 10 and control system 100 shown in FIGS. 1-4. However, it should be appreciated that the disclosed method 200 may be implemented with rotor blades having any other suitable configurations. In addition, although FIG. 5 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown at (202), the method 200 may include monitoring an incoming wind direction at the wind turbine power system 10. As shown at (204), the method 200 includes determining whether the wind direction is changing at a predetermined attack angle. If so, as shown at (206), the method 200 may include implementing a control scheme 208 for the wind turbine power system 100. For example, as shown at (210), the control scheme 208 may include rotating at least one of the rotor blades 22 to a pitch angle that is offset from a feather position by a predetermined number of degrees to reduce and/or eliminate flutter phenomenon from occurring. In such embodiments, the feather position described herein may include a position in which a chord of the rotor blade 22 is approximately inline with the incoming wind direction 66 at stand still or minimal rotation.

In one embodiment, as shown at (212), the control scheme 208 may also include determining a rotor position and/or a rotor orientation of the wind turbine power system 10 and rotating at least one of the rotor blades 22 to the pitch angle that is offset from the feather position by the predetermined number of degrees when the rotor position and/or the rotor orientation are indicative of the flutter phenomenon occurring. More specifically, in one embodiment, the predetermined number of degrees is less than about 10 degrees, such as less than about 5 degrees. **In** such embodiments, the minuscule deviation/offset of individual blades 22 from the feather position is configured to result in drastic reductions in flutter and is possible due to the control system 100 having significant stored backup energy that is available during loss of grid power. **In** certain embodiments, the method 200 may include rotating each of the rotor blades 22 away from the feather position by the same number of degrees. **In** alternative embodiments, the method 200 may include rotating each of the rotor blades 22 away from the feather position by a different number of degrees.

The method 200 further includes yawing the nacelle 16 approximately 180 degrees away from the incoming wind direction 66 when the incoming wind direction 66 is changing at the predetermined attack angle.

The method 200 also includes utilizing backup energy stored in the wind turbine power system 100 for powering one or more wind turbine components during the loss of grid power. One or more of the energy storage devices 84, 86 are configured for storing the backup energy. As such, if the main controller 26 of the wind turbine power system 100 is offline due to the loss of grid power, the energy storage devices 84, 86 are configured to power operation of the wind turbine power system 100 without interruption.

This written description uses examples to disclose the invention, including the best mode, and also to enable any person skilled in the art to practice the invention, including making and using any devices or systems and performing any incorporated methods. The patentable scope of the invention is defined by the claims.

## Claims

1. A method (200) for protecting an idling wind turbine power system (10) from damage during loss of grid power, the wind turbine power system (10) having a plurality of rotor blades (22), the method (200) comprising:
monitoring an incoming wind direction (66) at the wind turbine power system (10);
when the incoming wind direction (66) is changing at a predetermined attack angle, rotating at least one of the plurality of rotor blades (22) of the wind turbine power system (10) to a pitch angle that is offset from a feather position by a predetermined number of degrees to reduce and/or eliminate flutter phenomenon from occurring, wherein the predetermined number of degrees comprises less than about 10 degrees;
utilizing backup energy stored in the wind turbine power system (10) for powering one or more wind turbine (10) components during the loss of grid power, wherein the wind turbine power system (10) further comprises at least one energy storage device for storing the backup energy, and wherein the one or more wind turbine (10) components comprises one or more yaw drive mechanisms; and
yawing the nacelle of the wind turbine (10) approximately 180 degrees away from the incoming wind direction (66) when the incoming wind direction (66) is changing at the predetermined attack angle.

2. The method (200) of claim 1, further comprising determining at least one of a rotor position or a rotor orientation of the wind turbine power system (10) and rotating at least one of the plurality of rotor blades (22) of the wind turbine power system (10) to the pitch angle that is offset from the feather position by the predetermined number of degrees when the rotor position and/or the rotor orientation are indicative of the flutter phenomenon occurring.

3. The method (200) of claim 1 or 2, wherein rotating at least one of the plurality of rotor blades (22) of the wind turbine power system (10) to the pitch angle that is offset from a feather position by the predetermined number of degrees further comprises rotating each of the plurality of rotor blades (22) by the same number of degrees.

4. The method (200) of any of the preceding claims, wherein rotating at least one of the plurality of rotor blades (22) of the wind turbine power system (10) to the pitch angle that is offset from a feather position by the predetermined number of degrees further comprises rotating each of the plurality of rotor blades (22) by a different number of degrees.

5. The method (200) of any of the preceding claims, wherein the feather position comprises a position in which a chord of the rotor blade is approximately inline with the incoming wind direction (66) at stand still or minimal rotation.

6. The method (200) of claim 1, wherein the one or more wind turbine (10) components further comprises at least one of one or more pitch drive mechanisms, a brake, a main controller, or one or more electrical components of the wind turbine power system (10).

7. The method (200) of claim 6, wherein, if the main controller of the wind turbine power system (10) is offline due to the loss of grid power, the energy storage device is configured to power operation of the wind turbine power system (10) without interruption.

8. A backup control system (100) for protecting an idling wind turbine power system (10) from damage during loss of grid power, the backup control system (100) comprising:
a pitch control system (35) having an auxiliary power supply and a plurality of pitch drive mechanisms communicatively coupled to the auxiliary power supply via a communication link,
wherein, during the loss of grid power, the auxiliary power supply powers the pitch control system (35) to implement a control scheme for the wind turbine power system (10), the control scheme comprising:
monitoring an incoming wind direction (66) at the wind turbine power system (10);
when the incoming wind direction (66) is changing at a predetermined attack angle, rotating at least one of the plurality of rotor blades (22) of the wind turbine power system (10) to a pitch angle that is offset from a feather position by a predetermined number of degrees to reduce and/or eliminate flutter phenomenon from occurring, wherein the predetermined number of degrees comprises less than about 10 degrees;
utilizing backup energy stored in the wind turbine power system (10) for powering one or more wind turbine (10) components during the loss of grid power, wherein the wind turbine power system (10) further comprises at least one energy storage device for storing the backup energy, and wherein the one or more wind turbine (10) components comprises one or more yaw drive mechanisms; and
yawing the nacelle of the wind turbine (10) approximately 180 degrees away from the incoming wind direction (66) when the incoming wind direction (66) is changing at the predetermined attack angle.

9. The backup control system (100) of claim 8, wherein the control scheme further comprises:
determining at least one of a rotor position or a rotor orientation of the wind turbine power system (10); and,
rotating at least one of the plurality of rotor blades (22) of the wind turbine power system (10) to the pitch angle that is offset from the feather position by the predetermined number of degrees when the rotor position and/or the rotor orientation are indicative of the flutter phenomenon occurring.

10. The backup control system (100) of claim 8, wherein rotating at least one of the plurality of rotor blades (22) of the wind turbine power system (10) to the pitch angle that is offset from a feather position by the predetermined number of degrees further comprises rotating each of the plurality of rotor blades (22) by the same number of degrees.

## Patentansprüche

1. Verfahren (200) zum Schutz eines Windturbinen-Stromerzeugungssystems (10) im Leerlauf vor Schäden bei einem Ausfall der Netzstromversorgung, wobei das Windturbinen-Stromerzeugungssystem (10) eine Vielzahl von Rotorblättern (22) aufweist, wobei das Verfahren (200) umfasst:
Überwachen einer Anströmwindrichtung (66) am Windturbinen-Stromerzeugungssystem (10);
wenn sich die Anströmwindrichtung (66) in einem vorbestimmten Angriffswinkel ändert, Drehen wenigstens eines der Vielzahl der Rotorblätter (22) des Windturbinen-Stromerzeugungssystems (10) in einen Pitch-Winkel, der von einer Segelposition um eine vorbestimmte Gradzahl versetzt ist, um das Auftreten eines Flatterphänomens zu verringern und/oder zu beseitigen, wobei die vorbestimmte Gradzahl weniger als etwa 10 Grad umfasst;
Verwenden von in dem Windturbinen-Stromerzeugungssystems (10) gespeicherter Reserveenergie zum Energieversorgen einer oder mehrerer Windturbinenkomponenten (10) während des Ausfalls der Netzstromversorgung, wobei das Windturbinen-Stromerzeugungssystems (10) ferner mindestens eine Energiespeichervorrichtung zum Speichern der Reserveenergie umfasst, und wobei die eine oder mehreren Windturbinenkomponenten (10) einen oder mehrere Gier-Antriebsmechanismen umfassen; und
Gieren der Gondel der Windturbine (10) um etwa 180 Grad von der Anströmwindrichtung (66) weg, wenn sich die Anströmwindrichtung (66) unter dem vorbestimmten Anströmwinkel ändert.

2. Verfahren (200) nach Anspruch 1, das ferner das Bestimmen von mindestens einer Rotorposition oder einer Rotororientierung des Windturbinen-Stromerzeugungssystems (10) und das Drehen von mindestens einem der Vielzahl von Rotorblättern (22) des Windturbinen-Stromerzeugungssystems (10) auf den Pitch-Winkel umfasst, der von der Segelposition um die vorbestimmte Gradzahl versetzt ist, wenn die Rotorposition und/oder die Rotororientierung für das Auftreten des Flatterphänomen indikativ sind.

3. Verfahren (200) nach Anspruch 1 oder 2, wobei das Drehen mindestens eines der Vielzahl der Rotorblätter (22) des Windturbinen-Stromerzeugungssystems (10) auf den Pitch-Winkel, der von einer Segelposition um die vorbestimmte Gradzahl versetzt ist, ferner das Drehen von jedem der Vielzahl der Rotorblätter (22) um dieselbe Gradzahl umfasst.

4. Verfahren (200) nach einem der vorhergehenden Ansprüche, wobei das Drehen mindestens eines der Vielzahl der Rotorblätter (22) des Windturbinen-Stromerzeugungssystems (10) auf den Pitch-Winkel, der von einer Segelposition um die vorbestimmte Gradzahl versetzt ist, ferner das Drehen jedes der Vielzahl der Rotorblätter (22) um eine unterschiedliche Gradzahl umfasst.

5. Verfahren (200) nach einem der vorhergehenden Ansprüche, wobei die Segelposition eine Position umfasst, in der eine Sehne des Rotorblatts bei Stillstand oder minimaler Drehung ungefähr in einer Linie mit der Anströmwindrichtung (66) ist.

6. Verfahren (200) nach Anspruch 1, wobei die eine oder mehreren Komponenten der Windturbine (10) ferner mindestens einen von einem oder mehreren Pitch-Antriebsmechanismen, einer Bremse, einer Hauptsteuerung oder einer oder mehreren elektrischen Komponenten des Windturbinen-Stromerzeugungssystems (10) umfasst.

7. Verfahren (200) nach Anspruch 6, wobei, wenn die Hauptsteuerung des Windturbinen-Stromerzeugungssystems (10) aufgrund des Verlusts der Netzstromversorgung offline ist, die Energiespeichervorrichtung so konfiguriert ist, dass sie den Betrieb des Windturbinen-Stromerzeugungssystems (10) ohne Unterbrechung versorgt.

8. Backup-Steuerungssystem (100) zum Schutz eines Windturbinen-Stromerzeugungssystems (10) im Leerlauf vor Schäden während eines Ausfalls der Netzstromversorgung, wobei das Backup-Steuerungssystem (100) umfasst:
ein Pitch-Steuerungssystem (35) mit einer Hilfsstromversorgung und einer Vielzahl von Pitch-Antriebsmechanismen, die über eine Kommunikationsverbindung kommunikativ mit der Hilfsstromversorgung verbunden sind,
wobei während des Ausfalls der Netzstromversorgung die Hilfsstromversorgung das Pitch-Steuerungssystem (35) mit Strom versorgt, um ein Steuerungsschema für das Windturbinen-Stromerzeugungssystems (10) zu implementieren, wobei das Steuerungsschema umfasst:
Überwachen der Anströmwindrichtung (66) am Windturbinen-Stromerzeugungssystems (10);
wenn sich die Anströmwindrichtung (66) in einem vorbestimmten Angriffswinkel ändert, Drehen mindestens eines der Vielzahl der Rotorblätter (22) des Windturbinen-Stromerzeugungssystems (10) in einen Pitch-Winkel, der von einer Segelposition um eine vorbestimmte Gradzahl versetzt ist, um das Auftreten eines Flatterphänomens zu verringern und/oder zu beseitigen, wobei die vorbestimmte Gradzahl weniger als etwa 10 Grad umfasst;
Verwenden von in dem Windturbinen-Stromerzeugungssystems (10) gespeicherter Reserveenergie zum Antrieb einer oder mehrerer Windturbinenkomponenten (10) während des Ausfalls der Netzstromversorgung, wobei das Windturbinen-Stromerzeugungssystem (10) ferner mindestens eine Energiespeichervorrichtung zum Speichern der Reserveenergie umfasst, und wobei die eine oder mehreren Windturbinen-Komponenten (10) einen oder mehrere Gier-Antriebsmechanismen umfassen; und
Gieren der Gondel der Windturbine (10) um etwa 180 Grad von der Anströmwindrichtung (66) weg, wenn sich die Anströmwindrichtung (66) unter dem vorbestimmten Anströmwinkel ändert.

9. Backup-Steuerungssystem (100) nach Anspruch 8, wobei das Steuerungsschema ferner umfasst:
Bestimmen von mindestens einer Rotorposition oder einer Rotororientierung des Windturbinen-Stromerzeugungssystems (10); und
Drehen mindestens eines der Vielzahl der Rotorblätter (22) des Windturbinen-Stromerzeugungssystems (10) auf den Pitch-Winkel, der von der Segelposition um die vorbestimmte Gradzahl versetzt ist, wenn die Rotorposition und/oder die Rotororientierung für das Auftretenden des Flatterphänomens indikativ sind.

10. Backup-Steuerungssystem (100) nach Anspruch 8, wobei das Drehen mindestens eines der Vielzahl der Rotorblätter (22) des Windturbinen-Stromerzeugungssystems (10) auf den Pitch-Winkel, der von einer Segelposition um die vorbestimmte Gradzahl versetzt ist, ferner das Drehen jedes der Vielzahl der Rotorblätter (22) um dieselbe Gradzahl umfasst.

## Revendications

1. Procédé (200) permettant de protéger un système de puissance de turbine éolienne (10) au repos vis-à-vis d'un dommage pendant une perte de puissance de réseau, le système de puissance de turbine éolienne (10) ayant une pluralité de pales de rotor (22), le procédé (200) comprenant :
la surveillance d'une direction de vent entrant (66) au niveau du système de puissance de turbine éolienne (10) ;
lorsque la direction de vent entrant (66) est changeante à un angle d'attaque prédéterminé, la rotation d'au moins l'une parmi la pluralité de pales de rotor (22) du système de puissance de turbine éolienne (10) à un angle de pas qui est décalé d'une position de mise en drapeau d'un nombre prédéterminé de degrés pour réduire et/ou éliminer la survenue d'un phénomène de flottement, dans lequel le nombre prédéterminé de degrés comprend moins d'environ 10 degrés ;
l'utilisation d'énergie de secours stockée dans le système de puissance de turbine éolienne (10) pour alimenter en puissance un ou plusieurs composants de turbine éolienne (10) pendant la perte de puissance de réseau, dans lequel le système de puissance de turbine éolienne (10) comprend en outre au moins un dispositif de stockage d'énergie permettant de stocker l'énergie de secours, et dans lequel le ou les composants de turbine éolienne (10) comprennent un ou plusieurs mécanismes d'actionnement de lacet ; et
le mouvement de lacet de la nacelle de la turbine éolienne (10) d'approximativement 180 degrés à l'écart de la direction de vent entrant (66) lorsque la direction de vent entrant (66) est changeante à l'angle d'attaque prédéterminé.

2. Procédé (200) selon la revendication 1, comprenant en outre la détermination d'au moins l'une parmi une position de rotor ou une orientation de rotor du système de puissance de turbine éolienne (10) et la rotation d'au moins l'une parmi la pluralité de pales de rotor (22) du système de puissance de turbine éolienne (10) vers l'angle de pas qui est décalé de la position de mise en drapeau du nombre prédéterminé de degrés lorsque la position de rotor et/ou l'orientation de rotor indiquent la survenue du phénomène de flottement.

3. Procédé (200) selon la revendication 1 ou 2, dans lequel la rotation d'au moins l'une parmi la pluralité de pales de rotor (22) du système de puissance de turbine éolienne (10) vers l'angle de pas qui est décalé d'une position de mise en drapeau du nombre prédéterminé de degrés comprend en outre la rotation de chacune parmi la pluralité de pales de rotor (22) du même nombre de degrés.

4. Procédé (200) selon l'une quelconque des revendications précédentes, dans lequel la rotation d'au moins l'une parmi la pluralité de pales de rotor (22) du système de puissance de turbine éolienne (10) vers l'angle de pas qui est décalé d'une position de mise en drapeau du nombre prédéterminé de degrés comprend en outre la rotation de chacune parmi la pluralité de pales de rotor (22) d'un nombre différent de degrés.

5. Procédé (200) selon l'une quelconque des revendications précédentes, dans lequel la position de mise en drapeau comprend une position dans laquelle une corde de la pale de rotor est approximativement en ligne avec la direction de vent entrant (66) à l'arrêt ou en rotation minimale.

6. Procédé (200) selon la revendication 1, dans lequel le ou les composants de turbine éolienne (10) comprennent en outre au moins l'un parmi un ou plusieurs mécanismes d'actionnement de pas, un frein, un dispositif de commande principal, ou un ou plusieurs composants électriques du système de puissance de turbine éolienne (10).

7. Procédé (200) selon la revendication 6, dans lequel, si le dispositif de commande principal du système de puissance de turbine éolienne (10) est hors ligne en raison de la perte de puissance de réseau, le dispositif de stockage d'énergie est configuré pour alimenter en puissance le fonctionnement du système de puissance de turbine éolienne (10) sans interruption.

8. Système de commande de secours (100) permettant de protéger un système de puissance de turbine éolienne (10) au repos vis-à-vis d'un dommage pendant une perte de puissance de réseau, le système de commande de secours (100) comprenant :
un système de commande de pas (35) ayant une alimentation en puissance auxiliaire et une pluralité de mécanismes d'actionnement de pas couplés par communications avec l'alimentation en puissance auxiliaire par l'intermédiaire d'une liaison de communication,
dans lequel, pendant la perte de puissance de réseau, l'alimentation en puissance auxiliaire alimente en puissance le système de commande de pas (35) pour implémenter un schéma de commande pour le système de puissance de turbine éolienne (10), le schéma de commande comprenant :
la surveillance d'une direction de vent entrant (66) au niveau du système de puissance de turbine éolienne (10) ;
lorsque la direction de vent entrant (66) est changeante à un angle d'attaque prédéterminé, la rotation d'au moins l'une parmi la pluralité de pales de rotor (22) du système de puissance de turbine éolienne (10) à un angle de pas qui est décalé d'une position de mise en drapeau d'un nombre prédéterminé de degrés pour réduire et/ou éliminer la survenue d'un phénomène de flottement, dans lequel le nombre prédéterminé de degrés comprend moins d'environ 10 degrés ;
l'utilisation d'énergie de secours stockée dans le système de puissance de turbine éolienne (10) pour alimenter en puissance un ou plusieurs composants de turbine éolienne (10) pendant la perte de puissance de réseau, dans lequel le système de puissance de turbine éolienne (10) comprend en outre au moins un dispositif de stockage d'énergie permettant de stocker l'énergie de secours, et dans lequel le ou les composants de turbine éolienne (10) comprennent un ou plusieurs mécanismes d'actionnement de lacet ; et
le mouvement de lacet de la nacelle de la turbine éolienne (10) d'approximativement 180 degrés à l'écart de la direction de vent entrant (66) lorsque la direction de vent entrant (66) est changeante à l'angle d'attaque prédéterminé.

9. Système de commande de secours (100) selon la revendication 8, dans lequel le schéma de commande comprend en outre :
la détermination d'au moins l'une parmi une position de rotor ou une orientation de rotor du système de puissance de turbine éolienne (10) ; et,
la rotation d'au moins l'une parmi la pluralité de pales de rotor (22) du système de puissance de turbine éolienne (10) vers l'angle de pas qui est décalé de la position de mise en drapeau du nombre prédéterminé de degrés lorsque la position de rotor et/ou l'orientation de rotor indiquent la survenue du phénomène de flottement.

10. Système de commande de secours (100) selon la revendication 8, dans lequel la rotation d'au moins l'une parmi la pluralité de pales de rotor (22) du système de puissance de turbine éolienne (10) vers l'angle de pas qui est décalé d'une position de mise en drapeau du nombre prédéterminé de degrés comprend en outre la rotation de chacune parmi la pluralité de pales de rotor (22) du même nombre de degrés.
